# EUROPÄISCHE PATENTANMELDUNG

(11) **EP 4 541 554 A1**
(43) Veröffentlichungstag der Anmeldung: **23.04.2025**
(21) Anmeldenummer: 24203179.7
(22) Anmeldetag: 27.09.2024
(51) Int. Cl.: B29C 55/02

(54) **SYSTEM ZUR HERSTELLUNG VON KUNSTSTOFFFOLIE SOWIE VERFAHREN**

(30) Priorität: 17.10.2023 DE 102023128364; 14.08.2024 DE 102024123258
(71) Anmelder: Brückner Maschinenbau GmbH, 83313 Siegsdorf (DE)
(72) Erfinder: Weidacher, Quirin, 83278 Traunstein (DE); Dürr, Benjamin, 83278 Traunstein (DE)
(74) Vertreter: Flach Bauer & Partner Patentanwälte mbB

(57) **Zusammenfassung**

Ein System (10) zur Herstellung von Kunststofffolie hat eine Quellenanlage (30), eine Senkenanlage (32) und eine Wärmepumpe (42). Die Quellenanlage (30) weist eine Abwärmeabfuhr auf, die mit der Zufuhr der Wärmepumpe (42) thermisch verbunden ist, und die Senkenanlage (32) weist eine Prozesswärmezufuhr auf, die mit der Abfuhr der Wärmepumpe (42) thermisch verbunden ist.

Ferner ist ein Verfahren zum Betrieb des Systems (10) gezeigt.

## Beschreibung

Die Erfindung betrifft ein System zur Herstellung von Kunststofffolie sowie ein Verfahren zum Betrieb eines solchen Systems.

Systeme zur Herstellung von Kunststofffolie sind bekannt und umfassen üblicherweise wenigstens einen Extruder und eine Reckanlage.

Die Herstellung von Kunststofffolie in solchen Systemen ist sehr energieintensiv, da die verschiedenen Anlagen des Systems, insbesondere die Reckanlagen, Prozesswärme benötigen.

Aus diesem Grund ist es bekannt, dass die einzelnen Anlagen des Systems energieeffizient ausgeführt sind, und möglicherweise Vorrichtungen zur Wärmerückgewinnung aufweisen.

Weitere Steigerungen der Energieeffizienz sind wünschenswert.

Daher ist es die Aufgabe der Erfindung, ein System zur Herstellung von Kunststofffolie sowie ein Verfahren zum Betrieb eines solchen Systems bereitzustellen, die eine verbesserte Energieeffizienz haben.

Die Aufgabe wird gelöst durch ein System zur Herstellung von Kunststofffolie. Das System hat eine Quellenanlage, eine Senkenanlage und eine Wärmepumpe, wobei die Wärmepumpe eine Zufuhr für Wärme und eine Abfuhr für Nutzwärme aufweist. Die Quellenanlage weist eine Abwärmeabfuhr auf, die mit der Zufuhr der Wärmepumpe thermisch verbunden ist, und die Senkenanlage weist eine Prozesswärmezufuhr auf, die mit der Abfuhr der Wärmepumpe thermisch verbunden ist.

Die Erfinder haben erkannt, dass eine Steigerung der Energieeffizienz dadurch möglich ist, dass die Abwärme einer der Anlagen als Prozesswärme für eine andere Anlage verwendet werden kann. Durch die Wärmepumpe ist es nun möglich, Abwärme von bestimmten Anlagen des Systems zu verwenden und als Prozesswärme für andere Anlagen des Systems zur Verfügung zu stellen. Die Energieeffizienz des Systems wird dadurch verbessert.

Eine thermische Verbindung im Sinne dieser Offenbarung erfolgt zum Beispiel mittels eines Wärmeträgerkreislaufs.

Das System ist beispielsweise ein System zur Herstellung von biaxial verstreckter Folie, wie beispielsweise Polypropylenfolie (BO-PP), Polyethylenterephthalatfolie (BO-PET), Polyamidfolie (BOPA), Polyethylenfolie (BO-PE), Polyactidfolie (BO-PLA), Kondensatorfolie (BOPP-C) oder Batterieseparatorfolie (BSF).

In einer Ausgestaltung ist die Zufuhr der Wärmepumpe ein Verdampfer und/oder die Abfuhr der Wärmepumpe ist ein Kondensator, wodurch eine thermische Verbindung zur Wärmepumpe effizient möglich ist.

Zum Beispiel ist der Verdichter stromabwärts der Zufuhr und stromaufwärts der Abfuhr angeordnet. Die Drossel kann stromabwärts der Abfuhr und stromaufwärts der Zufuhr angeordnet sein.

In einer Ausführungsform weist das System einen ersten Wärmeträgerkreislauf auf, der die Quellenanlage mit der Wärmepumpe thermisch verbindet. Der erste Wärmeträgerkreislauf stellt eine effiziente und verlustarme thermische Verbindung zwischen der Wärmepumpe und der Quellenanlage dar.

Der erste Wärmeträgerkreislauf kann eine Pumpe für den Wärmeträger aufweisen. Der Wärmeträger kann Thermalöl oder Druckwasser sein.

Beispielsweise weist der erste Wärmeträgerkreislauf einen ersten Wärmetauscher, insbesondere einen LuftWärmetauscher auf, der mit der Abwärmeabfuhr der Quellenanlage thermisch verbunden ist. Eine Anpassung der Quellenanlage ist damit nicht notwendig.

Zur weiteren Steigerung der Energieeffizienz kann das System eine Nebenquellenanlage aufweisen, und der erste Wärmeträgerkreislauf kann einen zweiten Wärmetauscher aufweisen, wobei eine Abwärmeabfuhr der Nebenquellenanlage thermisch insbesondere direkt mit dem zweiten Wärmetauscher verbunden ist.

Beispielsweise ist der zweite Wärmetauscher stromaufwärts des ersten Wärmetauschers angeordnet und/oder stromabwärts der Zufuhr der Wärmepumpe.

In einer Ausgestaltung ist die Abwärmeabfuhr der Quellenanlage eine Abluftabfuhr, wobei der erste Wärmetauscher einen Gaswäscher und einen Flüssigkeitswärmetauscher umfasst. Auf diese Weise kann der Wärmetauscher eine Doppelfunktion erfüllen.

In einer Ausführungsform weist das System einen zweiten Wärmeträgerkreislauf auf, der die Senkenanlage mit der Wärmepumpe thermisch verbindet. Dadurch wird eine effiziente und verlustarme thermische Verbindung zwischen der Wärmepumpe und der Senkenanlage bereitgestellt.

Der zweite Wärmeträgerkreislauf weist insbesondere eine Pumpe für den Wärmeträger auf. Der Wärmeträger kann Thermalöl oder Druckwasser sein.

In einer Ausgestaltung weist das System eine Zusatzheizung auf, die im zweiten Wärmeträgerkreislauf stromabwärts der Wärmepumpe und stromaufwärts der Senkenanlage angeordnet ist. Mittels der Zusatzheizungen können Spitzen des Bedarfs an Prozesswärme der Senkenanlage abgefedert werden, sodass eine Wärmepumpe mit geringerer Leistung verbaut werden kann.

Um die Zusatzheizung unabhängig von der Wärmepumpe betreiben zu können, kann der zweite Wärmeträgerkreislauf eine Bypass-Strecke mit einem Bypass-Ventil aufweisen, wobei die Bypass-Strecke stromabwärts der Wärmepumpe und stromaufwärts der Zusatzheizung mündet und/oder von einem Punkt stromaufwärts der Wärmepumpe und stromabwärts der Senkenanlage ausgeht.

In einer Ausgestaltung weist das System zwei Wärmepumpen auf, die parallel zwischen der Quellenanlage und der Senkenanlage geschaltet sind, insbesondere wobei die Wärmepumpen verschiedene Temperaturleistungsbereiche aufweisen. Die beiden Wärmepumpen können für jeweils einen engen Temperaturleistungsbereich ausgelegt sein, wodurch sie effizienter betrieben werden können als eine einzelne Wärmepumpe.

Insbesondere ist die Quellenanlage thermisch mit der Zufuhr jeder der Wärmepumpen verbunden und die Senkenanlage thermisch mit der Abfuhr jeder der Wärmepumpen verbunden.

Zur Steigerung der Effizienz können die Zufuhren der Wärmepumpen im ersten Wärmeträgerkreislauf in Reihe angeordnet sein und/oder die Abfuhren der Wärmepumpen können im zweiten Wärmeträgerkreislauf in Reihe angeordnet sein.

Besonders effizient kann eine Anordnung der Abfuhren im zweiten Wärmeträgerkreislauf bezüglich des Flusses des Wärmeträgers in umgekehrter Reihenfolge wie die Zuläufe im ersten Wärmeträgerkreislauf sein.

In einer Ausgestaltung kann die Quellenanlage oder die Nebenquellenanlage eine Reckanlage, insbesondere eine Querreckanlage oder eine Simultanreckanlage, eine Extrusionsanlage, eine Gießwalzenanlage und/oder eine Zugrollenanlage sein, wodurch die Abwärme dieser Anlagen effizient verwertet wird.

Die Senkenanlage kann eine Reckanlage, insbesondere eine Querreckanlage oder Längsreckanlage, ein Kristallisator, eine Rohstofftrocknungsanlage und/oder ein Wasserbad einer Simultanreckanlage sein, wodurch der Prozesswärmebedarf dieser Anlagen aus Abwärme gedeckt werden kann. Auch eine Vorheizzone einer Querreckanlage kann eine Senke sein.

Die Abwärme eines Extruders der Extrusionsanlage und/oder der Gießwalzeneinheit steht insbesondere in Kühlwasser zu Verfügung, die Abwärme der Öfen der Reckanlage, einer Dosiervorrichtung der Extrusionsanlage und der Zugrolle in Abluft.

Die Quellenanlage ist insbesondere eine Querreckanlage.

In einer Ausführungsform weist die Quellenanlage eine Vorrichtung zur Wärmerückgewinnung auf, wobei die Abwärmeabfuhr der Vorrichtung zur Wärmerückgewinnung die Abwärmeabfuhr der Quellenanlage ist. Auf diese Weise kann die Abwärme der Quellenanlage besonders effizient genutzt werden.

Die Aufgabe wird ferner gelöst durch ein Verfahren zum Betrieb eines Systems zur Herstellung von Kunststofffolie mit einer Quellenanlage, einer Senkenanlage, und einer Wärmepumpe. Das Verfahren umfasst Folgendes:
- Zuführen von Abwärme der Quellenanlage zur Wärmepumpe, und
- Zuführen von Nutzwärme von der Wärmepumpe zur Senkenanlage als Prozesswärme.

Die zum System beschriebenen Merkmale und Vorteile gelten gleichermaßen für das Verfahren und umgekehrt. Die Komponenten des Systems sind ferner dazu ausgebildet und eingerichtet, das Verfahren durchzuführen.

Beispielsweise ist die Abwärme der Quellenanlage die Abwärme einer Vorrichtung zur Wärmerückgewinnung der Quellenanlage, wodurch die Effizienz weiter gesteigert wird.

Zur Begegnung von Bedarfsspitzen kann der Senkenanlage zur Nutzwärme der Wärmepumpe andere Nutzwärme zugeführt werden, die eine Zusatzheizung des Systems erzeugt.

Zur effizienten Zuführung der anderen Nutzwärme kann die andere Nutzwärme in einem zweiten Wärmeträgerkreislauf des Systems erzeugt werden, der die Nutzwärme der Wärmepumpe zur Senkenanlage führt.

Zum Schutz der Wärmepumpe kann ein Bypass-Ventil in einer Bypass-Strecke des zweiten Wärmeträgerkreislaufs, die die Wärmepumpe überbrückt, geöffnet und ein Sperrventil stromaufwärts der Wärmepumpe geschlossen werden, wenn die Rücklauftemperatur von der Senkenanlage im zweiten Wärmeträgerkreislauf über der Temperatur im zweiten Wärmeträgerkreislauf unmittelbar stromabwärts der Wärmepumpe liegt.

Weitere Vorteile und Merkmale der Erfindung ergeben sich aus der nachfolgenden Beschreibung sowie aus den beigefügten Zeichnungen, auf die Bezug genommen wird.
- Fig. 1: zeigt ein System zur Herstellung von Kunststofffolie gemäß einer Ausführungsform der Erfindung in perspektivischer schematischer Ansicht,
- Fig. 2: zeigt eine äußerst schematische Darstellung eines Teils des Systems der Figur 1 gemäß einer ersten erfindungsgemäßen Ausführungsform,
- Fig. 3: zeigt ein schematisches Flussdiagramm einer Ausführungsform eines erfindungsgemäßen Verfahrens,
- Fig. 4: zeigt eine äußerst schematische Darstellung eines Teils des Systems der Figur 1 in einer zweiten erfindungsgemäßen Ausführungsform,
- Fig. 5: zeigt eine schematische Darstellung eines Gaswäschers als Teil einer weiteren Ausführungsform des erfindungsgemäßen Systems,
- Fig. 6: zeigt eine schematische Darstellung eines Teils eines ersten Wärmeträgerkreislaufs eines erfindungsgemäßen Systems in einer weiteren Ausführungsform,
- Fig. 7: zeigt eine äußerst schematische Darstellung eines Teils des Systems der Figur 1 in einer dritten erfindungsgemäßen Ausführungsform,
- Fig. 8: zeigt eine äußerst schematische Darstellung eines Teils des Systems der Figur 1 in einer vierten erfindungsgemäßen Ausführungsform,
- Fig. 9: zeigt eine äußerst schematische Darstellung eines Teils des Systems der Figur 1 in einer fünften erfindungsgemäßen Ausführungsform,
- Fig. 10: zeigt eine äußerst schematische Darstellung eines Teils des Systems der Figur 1 in einer sechsten erfindungsgemäßen Ausführungsform, und
- Fig. 11: zeigt eine äußerst schematische Darstellung eines Systems einer weiteren erfindungsgemäßen Ausführungsform.

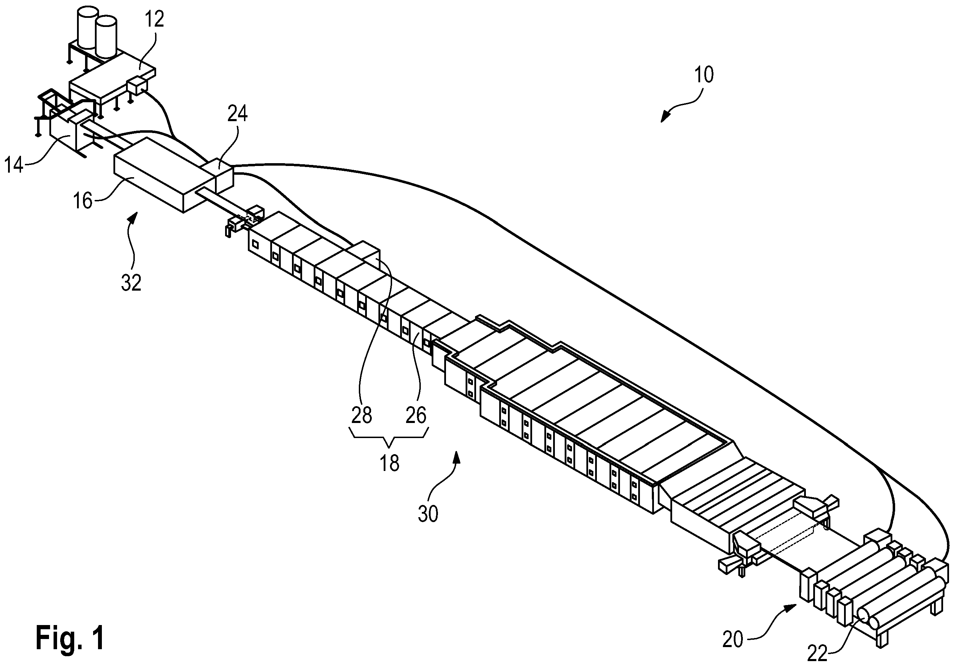

In Figur 1 ist äußerst schematisch ein System 10 zur Herstellung von Kunststofffolie gezeigt, das mehrere verschiedene Anlagen und Vorrichtungen umfasst.

Im gezeigten Beispiel weist das System 10 eine Extrusionsanlage 12, eine Gießwalzenanlage 14, eine Längsreckanlage 16 (MDO, "Machine Direction Orienter"), eine Querreckanlage 18 (TDO, "Transverse Direction Orienter"), eine Zugrollenanlage 20, eine Wickleranlage 22 sowie eine Wärmepumpenanlage 24 auf.

Die hergestellte Folie ist beispielsweise eine biaxial verstreckte Folie, wie Polypropylenfolie (BO-PP), Polyethylenterephthalatfolie (BO-PET), Polyamidfolie (BOPA), Polyethylenfolie (BO-PE), Polyactidfolie (BO-PLA), Kondensatorfolie (BOPP-C) oder Batterieseparatorfolie (BSF).

Zur Herstellung der Kunststofffolie wird mittels der Extrusionsanlage 12 ein Film auf der Kühlwalze einer Gießwalzenanlage 14 erzeugt. Hierzu erzeugt die Extrusionsanlage 12 aus Ausgangsprodukten, wie Granulaten, eine Schmelze, die auf die Kühlwalze aufgetragen wird, wodurch der Film erzeugt wird.

Dieser Film wird von der Gießwalzenanlage 14 zur Längsreckanlage 16 gefördert. In der Längsreckanlage 16 wird der Film in Längsrichtung gereckt, um eine Folie zu erhalten.

In der Längsreckanlage 16 läuft der Film über eine Vielzahl an Rollen, die beheizt sind, um den Film auf die gewünschte Temperatur zu bringen, um ihn verstrecken zu können.

Zwischen mindestens zwei der in der Längsreckanlage 16 vorhandenen Rollen findet die Reckung in Längsrichtung, d. h. in Abzugsrichtung, statt, sodass aus dem Film eine Folie wird.

Die erhaltene Folie wird von der Längsreckanlage 16 zur Querreckanlage 18 gefördert und in der Querreckanlage 18 in Querrichtung gereckt.

Die Querreckanlage 18 hat entlang der Abzugsrichtung des Systems 10 einen Ofen 26 mit verschiedenen Zonen zur Behandlung der Folie.

In der ersten Zone, auch Vorheizzone genannt, wird die Folie erwärmt. In der anschließenden zweiten Zone ("Reckzone") wird die Folie in Querrichtung gereckt, sodass sie zum Ende der zweiten Zone eine größere Breite und geringere Dicke aufweist als zu Beginn.

Nach erfolgter Reckung durchläuft die Folie dann die dritte und weitere Zonen ("Wärmebehandlungszone", "Weiterheizzone" und/oder "Annealingzone" genannt), bei der beispielsweise eine Relaxierung der Folie bei hohen Temperaturen erfolgen kann. Eine oder mehrerer dieser Zonen können Quelle für Abwärme dienen.

Anschließend verläuft die Folie durch eine weitere Zone "Kühlzone"), wobei die Folie in der letzten Zone abgekühlt wird.

Eine weitere Zone wird Neutralzone genannt und dient zur Trennung von Zonen. Die Neutralzone ist beispielsweise ein leerer Raum ohne Belüftung.

Die Zonen der Querreckanlagen 18 können auch anders aufgeteilt sein und/oder in ihrer Länge anders ausgeführt sein. Zum Beispiel können weniger oder kürzere Neutralzonen vorgesehen sein oder die Neutralzonen können an anderen Stellen, auch zusätzlich, angeordnet sein. Auch Änderungen an den übrigen Zonen sind denkbar.

Nach der Querreckanlage 18 verläuft die nun biaxial gereckte Folie durch die Zugrollenanlage 20 und wird mittels der Wickleranlage 22 aufgewickelt.

Denkbar ist auch, dass das System 10 auf andere Weise ausgebildet ist, beispielsweise mittels einer Simultanreckanlage, die die Längsreckanlage 16 und die Querreckanlage 18 ersetzt oder ergänzt.

Zumindest die Längsreckanlage 16 und die Querreckanlage 18 benötigen während des Betriebs des Systems Prozesswärme.

Gleichzeitig entstehen in der Längsreckanlage 16 und der Querreckanlage 18 aber auch in den weiteren Anlagen Abwärme.

Beispielsweise erzeugen der oder die Extruder der Extrusionsanlage 12 und auch die Kühlwalze bzw. das Kühlbecken/Wasserbad der Gießwalzenanlage 14 Abwärme, die beide in Form von erwärmtem Kühlwasser vorliegen.

Warme Abluft als Abwärme erzeugen beispielsweise die Längsreckanlage 16 und die Querreckanlage 18, aber auch eine Dosiervorrichtung der Extrusionsanlage 12, die Gießwalzenanlage 14 und die Zugrollenanlage 20.

Beispielsweise kann die Querreckanlage 18 neben den beschriebenen Zonen auch eine Vorrichtung 28 zur Wärmerückgewinnung aufweisen. Die Vorrichtung 28 zur Wärmerückgewinnung ist optional.

Diese Vorrichtung 28 erhält sowohl Frischluft aus der Umgebung als auch die Abluft aus dem Ofen 26, beispielsweise der Wärmebehandlungszone und/oder der Kühlzone. Mittels der Abluft aus dem Ofen 26 wird die Frischluft für den Ofen vorgewärmt, sodass Teile der Abwärme des Ofens 26 im Ofen 26 direkt selbst wieder als Prozesswärme zugeführt werden.

Die Vorrichtung 28 zur Wärmerückgewinnung ist per se bekannt und auch die Anlagen 12, 14, 16, 18, 20 und 22 sind per se bekannt.

Die Wärmepumpenanlage 24 ist in Figur 1 lediglich schematisch dargestellt und kann mit jeder der einzelnen Anlagen 12, 14, 16, 18, 20 und 22 in thermischem Kontakt stehen, um die Abwärme einer der Anlagen 12 bis 22 zu erhalten und/oder Prozesswärme für eine dieser Anlagen 12 bis 22 zur Verfügung zu stellen.

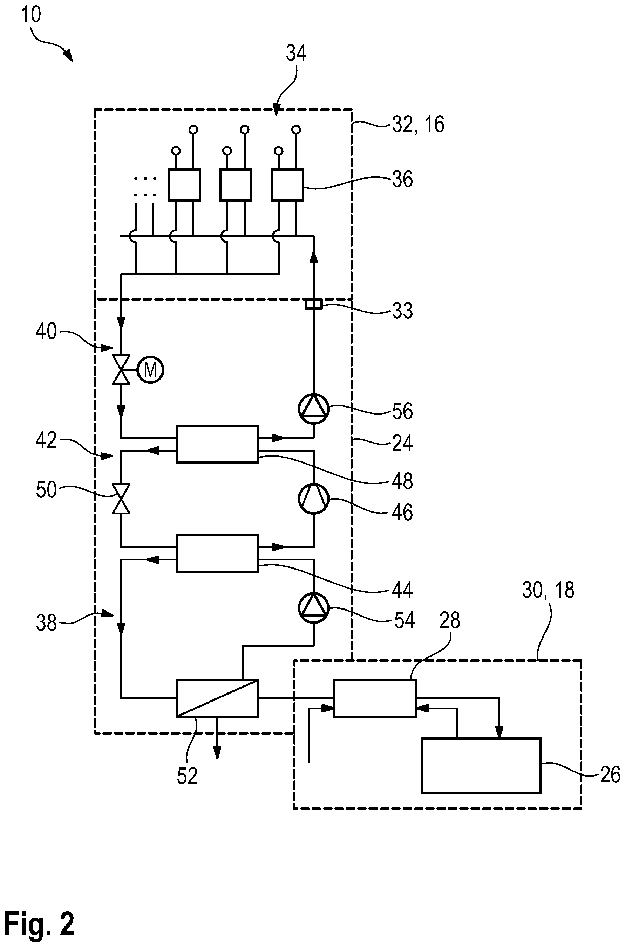

In Figur 2 ist ein Teil des Systems 10 gemäß Figur 1 äußerst schematisch dargestellt. Zu sehen sind eine Quellenanlage 30, eine Senkenanlage 32 sowie die Wärmepumpenanlage 24.

In diesem Ausführungsbeispiel ist die Quellenanlage 30 die Querreckanlage 18 des Systems 10. Als Quellenanlage 30 kommen auch andere Anlagen des Systems 10 in Betracht, die Abwärme erzeugen, beispielsweise andere Reckanlagen, wie die Längsreckanlage 16 (oder falls vorhanden auch eine Simultanreckanlage), die Extrusionsanlage 12, die Gießwalzenanlage 14 und/oder die Zugrollenanlage 20.

Die Quelle kann eine bestimmte Zone der Quellenanlage 30 sein, zum Beispiel die Annealingzone. Denkbar ist auch, dass mehrere Zonen der Quellenanlage 30 die Quelle sind, zum Beispiel die Annealingzone und die Vorheizzone, die Annealingzone und die Heizzone oder die Annealingzone, die Vorheizzone und die Heizzone.

Im gezeigten Ausführungsbeispiel ist die Senkenanlage 32 die Längsreckanlage 16. Denkbar ist jedoch auch, dass die Senkenanlage 32 ein Kristallisator der Extrusionsanlage 12, eine Rohstofftrocknungsanlage der Extrusionsanlage 12 und/oder ein Wasserbad einer Simultanreckanlage ist.

Die Wärmepumpenanlage 24 verbindet die Quellenanlage 30 thermisch mit einer Senkenanlage 32 und stellt der Senkenanlage 32 Prozesswärme zur Verfügung.

Von der Querreckanlage 18 als Quellenanlage 30 ist in Figur 2 lediglich der Ofen 26 und die Vorrichtung 28 zur Wärmerückgewinnung dargestellt.

Die Abwärme der Vorrichtung 28 zur Wärmerückgewinnung d.h. die etwas abgekühlte Abluft aus dem Ofen 26, wird der Wärmepumpenanlage 24 als Abwärme der Quellenanlage 30 bereitgestellt.

Die Längsreckanlage 16 ist in Figur 2 ebenfalls nur sehr schematisch angedeutet, wobei die Längsreckanlage 16 einen Eingang 33 als Prozesswärmezufuhr, mehrere Rollen 34 und mehrere Mischaggregate 36 aufweist.

Die Rollen 34 werden von einem Wärmeträger, beispielsweise ein Thermalöl oder Druckwasser, durchflossen, wodurch diese temperiert werden.

Die Mischaggregate 36 erhalten sowohl die zu den Rollen 34 führende als auch die von den Rollen 34 kommende Strömung des Wärmeträgers und sind dazu ausgebildet, die Temperatur des Wärmeträgers zu den Rollen 34 (Vorlauf) einzustellen, insbesondere individuell für einzelne Rollen 34 oder Untergruppen von Rollen 34.

Die Wärmepumpenanlage 24 weist im gezeigten Ausführungsbeispiel einen ersten Wärmeträgerkreislauf 38, einen zweiten Wärmeträgerkreislauf 40 sowie eine Wärmepumpe 42 auf.

Die Wärmepumpe 42 weist, wie per se bekannt, einen Verdampfer 44, einen Verdichter 46, einen Kondensator 48 sowie eine Drossel 50 auf.

Der Verdampfer 44 stellt dabei die Zufuhr der Wärmepumpe 42 für Wärme dar.

Stromabwärts des Verdampfers 44 ist der Verdichter 46 angeordnet, wobei stromabwärts des Verdichters 46 der Kondensator 48 angeordnet ist.

Der Kondensator 48 bildet die Abfuhr für Nutzwärme der Wärmepumpe 42.

Die Drossel 50 ist schließlich stromabwärts des Kondensators 48 und stromaufwärts des Verdampfers 44 angeordnet.

Der erste Wärmeträgerkreislauf 38 weist einen ersten Wärmetauscher 52 sowie eine Pumpe 54 auf. Als Wärmeträger kann Thermalöl oder Druckwasser verwendet werden.

Innerhalb des ersten Wärmeträgerkreislaufs 38 ist auch die Zufuhr der Wärmepumpe 42, d. h. hier der Verdichter 46, angeordnet.

Die Zufuhr liegt im gezeigten Ausführungsbeispiel stromabwärts der Pumpe 54, sodass sich die Pumpe 54 zwischen dem ersten Wärmetauscher 52 und der Zufuhr befindet.

Der erste Wärmetauscher 52 ist in Abhängigkeit des Mediums ausgebildet, dass die Abwärme der Quellenanlage 30 trägt. Im diskutierten Beispiel ist dies Luft, sodass der erste Wärmetauscher 52 als Luftwärmetauscher ausgebildet ist.

Der erste Wärmetauscher 52 erhält die Abwärme, also die Abluft, der Quellenanlage 30.

Der erste Wärmeträgerkreislauf 38 stellt daher eine thermische Verbindung zwischen der Quellenanlage 30 und der Zufuhr der Wärmepumpe 42 (hier also dem Verdampfer 44) bereit.

Der zweite Wärmeträgerkreislauf 40 dient zur thermischen Verbindung der Abfuhr der Wärmepumpe 42 mit der Senkenanlage 32.

Der Wärmeträger des zweiten Wärmeträgerkreislaufs 40 kann Thermalöl oder Druckwasser sein.

Der zweite Wärmeträgerkreislauf 40 weist im ersten Ausführungsbeispiel eine Pumpe 56 auf, wobei sowohl die Abfuhr der Wärmepumpe 42 (im gezeigten Ausführungsbeispiel also der Kondensator 48) als auch die Senkenanlage 32 in den zweiten Wärmeträgerkreislauf 40 integriert sind.

Der Wärmeträgerkreislauf 40 geht beispielsweise in den Wärmeträgerkreislauf der Senkenanlage 32 am Eingang 33 über und speist die Mischaggregate 36 und optional sogar die Rollen 34 mit dem Wärmeträger.

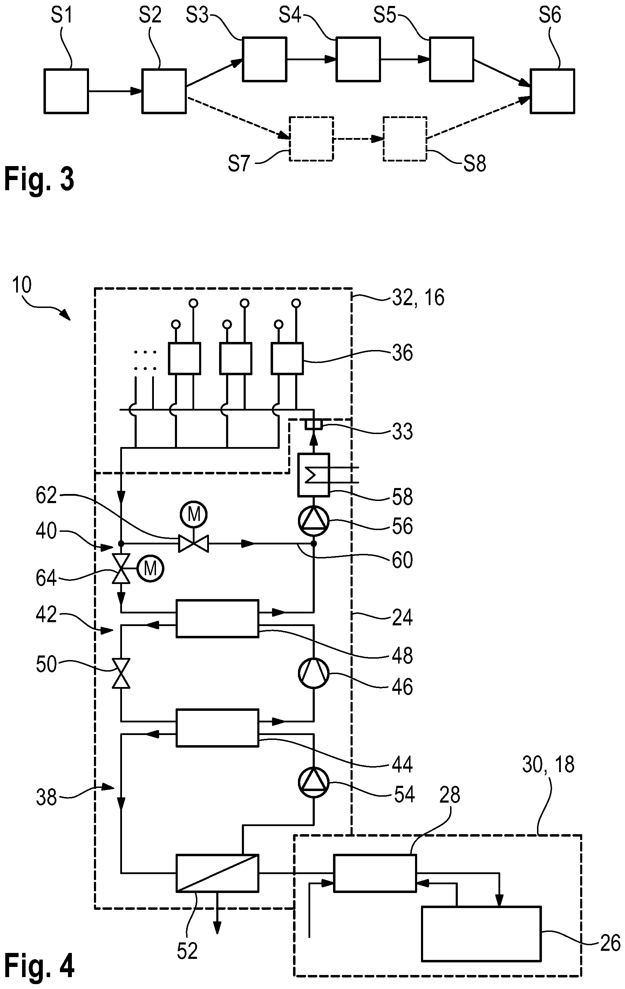

Während des Betriebs des Systems 10, insbesondere bei der Herstellung der Kunststofffolie, wird das in Figur 3 schematisch dargestellte Verfahren durchgeführt.

Während des Betriebs des Systems 10 erzeugt die Quellenanlage 30 Abwärme. Im Beispiel erzeugt der Ofen 26 der Querreckanlage 18 Abwärme in Form von Abluft (S1).

Die Abwärme wird durch die Vorrichtung 28 zur Wärmerückgewinnung teilweise wieder als Prozesswärme dem Ofen 26 zugeführt (S2).

Die Abwärme der Vorrichtung 28, d.h. die nun etwas abgekühlte Abluft aus dem Ofen 26, stellt die Abwärme der Quellenanlage 30 dar und hat beispielsweise ein Temperaturniveau im Bereich von 60 °C bis 140 °C.

Bei S3 wird die Abwärme der Quellenanlage 30 der Wärmepumpenanlage 24, genauer gesagt dem ersten Wärmetauscher 52 des ersten Wärmeträgerkreislauf 38 zugeleitet.

Die Abwärme der Quellenanlage 30 wird nun in den Wärmeträger des ersten Wärmeträgerkreislauf 38 übertragen und der Zufuhr der Wärmepumpe 42 (hier dem Verdampfer 44) zugeführt (S4).

Folglich wird die Abwärme der Quellenanlage 30 der Wärmepumpe 42 zugeführt.

Die Temperatur des Wärmeträgers im ersten Wärmeträgerkreislauf 38 unmittelbar stromabwärts vor dem Verdampfer 44 wird als Vorlauftemperatur der Wärmepumpe 42 angesehen.

Die Vorlauftemperatur der Wärmepumpe 42 liegt beispielsweise im Bereich zwischen 55°C und 140°C.

Die Wärmepumpe 42 erwärmt nun an ihrer Abfuhr für Nutzwärme (d.h. am Kondensator 48 im gezeigten Ausführungsbeispiel) den Wärmeträger des zweiten Wärmeträgerkreislaufs 40 auf ein Temperaturniveau, das oberhalb des Temperaturniveaus des Vorlaufs der Wärmepumpe 42 liegt (S5).

Beispielsweise beträgt die Temperatur des Wärmeträgers im zweiten Wärmeträgerkreislaufs 40 unmittelbar stromabwärts der Wärmepumpe 42 zwischen 90°C und 160°C, wobei auch Temperaturen von 200°C und höher denkbar sind.

Die auf diese Weise erzeugte Nutzwärme wird mittels des zweiten Wärmeträgerkreislaufs 40 der Senkenanlage 32 als Prozesswärme zugeführt.

Im gezeigten Ausführungsbeispiel werden die Rollen 34 der Längsreckanlage 16 mittels der zugeführten Prozesswärme erwärmt.

Auf diese Weise wird die Abwärme der Quellenanlage 30 äußerst effizient wiederverwertet, wodurch die Energieeffizienz des gesamten Systems 10 deutlich gesteigert werden kann.

Die Figuren 4 bis 8 zeigen weitere Ausführungsformen eines erfindungsgemäßen Systems und entsprechen im Wesentlichen der zuvor diskutierten Ausführungsform. Im Folgenden werden daher lediglich die Unterschiede diskutiert und die gleichen und funktionsgleichen Teile sind mit denselben Bezugszeichen versehen.

Figur 4 zeigt in einer Ansicht ähnlich der Figur 2 ein Teil eines Systems 10 in einer zweiten Ausführungsform.

Im Unterschied zur ersten Ausführungsform weist das System 10 nun eine Zusatzheizung 58 auf.

Die Zusatzheizung 58 ist im zweiten Wärmeträgerkreislauf 40 angeordnet und dazu eingerichtet den Wärmeträger des zweiten Wärmeträgerkreislaufs 40 zu erwärmen. Beispielsweise handelt es sich um eine elektrisch betriebene Heizung, wie eine Heizwendel. Denkbar ist auch der Einsatz eines Wärmetauschers als Zusatzheizung 58.

Die Zusatzheizung 58 ist stromabwärts der Wärmepumpe 42 und stromaufwärts der Senkenanlage 32 angeordnet.

Außerdem weist der zweite Wärmeträgerkreislauf 40 in dieser Ausführungsform eine Bypass-Strecke 60 auf, in der ein Bypass-Ventil 62 vorgesehen ist, das die Bypass-Strecke 60 sperren kann.

Die Bypass-Strecke zweigt stromabwärts der Senkenanlage 32 und stromaufwärts der Wärmepumpe 42 von der übrigen Strecke des Kreislaufs ab, überbrückt die Wärmepumpe 42 und mündet wieder in die übrige Strecke des Kreislaufs stromabwärts der Wärmepumpe 42 und stromaufwärts der Zusatzheizung 58.

Zudem kann im zweiten Wärmeträgerkreislauf 40 ein Sperrventil 64 vorgesehen sein, das stromaufwärts der Wärmepumpe 42 und stromabwärts der Abzweigung der Bypass-Strecke 60 angeordnet ist.

Mittels der Zusatzheizung 58 kann der Wärmeträger im zweiten Wärmeträgerkreislauf 40 zusätzlich oder alternativ zur Wärmepumpe 42 erwärmt werden.

Dadurch kann der Senkenanlage 32 alternativ oder zusätzlich zur Wärmepumpe 42 andere Nutzwärme als Prozesswärme zugeführt werden (S7, in Figur 3 gestrichelt dargestellt).

Wenn die Senkenanlage 32 einen besonders hohen Bedarf an Prozesswärme hat, beispielsweise beim Anfahren der Anlage, kann die Zusatzheizung 58 eingeschaltet werden. Die Zusatzheizung 58 führt dem Wärmeträger dann, zusätzlich zu der von der Wärmepumpe 42 zur Verfügung gestellten Nutzwärme, auch andere Nutzwärme zu, um auf das benötigte Temperaturniveau am Eingang 33 bzw. an der Prozesswärmezufuhr der Senkenanlage 32 zu gelangen.

Ist dabei die Temperatur im zweiten Wärmeträgerkreislauf 40 unmittelbar stromabwärts der Wärmepumpe 42 niedriger als die Rücklauftemperatur des zweiten Wärmeträgerkreislaufs 40, d.h. die Temperatur stromabwärts der Senkenanlage 32, ist ein Betrieb der Wärmepumpe 42 nicht möglich.

In diesem Fall wird das Bypass-Ventil 62 geöffnet und (wenn dies noch nicht geschlossen ist) das Sperrventil 64 geschlossen, wodurch die Wärmepumpe 42 überbrückt wird (S8, in Figur 3 gestrichelt dargestellt).

Die gesamte Prozesswärme für die Senkenanlage 32 wird dann von der Zusatzheizung 58 erzeugt. Dies kann ebenfalls zu Beginn des Betriebs des Systems 10 notwendig werden, wenn die Quellenanlage 30 noch nicht genügend Abwärme zur Verfügung stellt.

Außerdem kann aufgrund der Zusatzheizung 58 eine Wärmepumpe 42 mit geringerer Wärmeleistung verwendet werden, da durch die Zusatzheizung 58 auch Leistungsspitzen abgedeckt werden können. Hierdurch werden die Kosten des Systems 10 gesenkt.

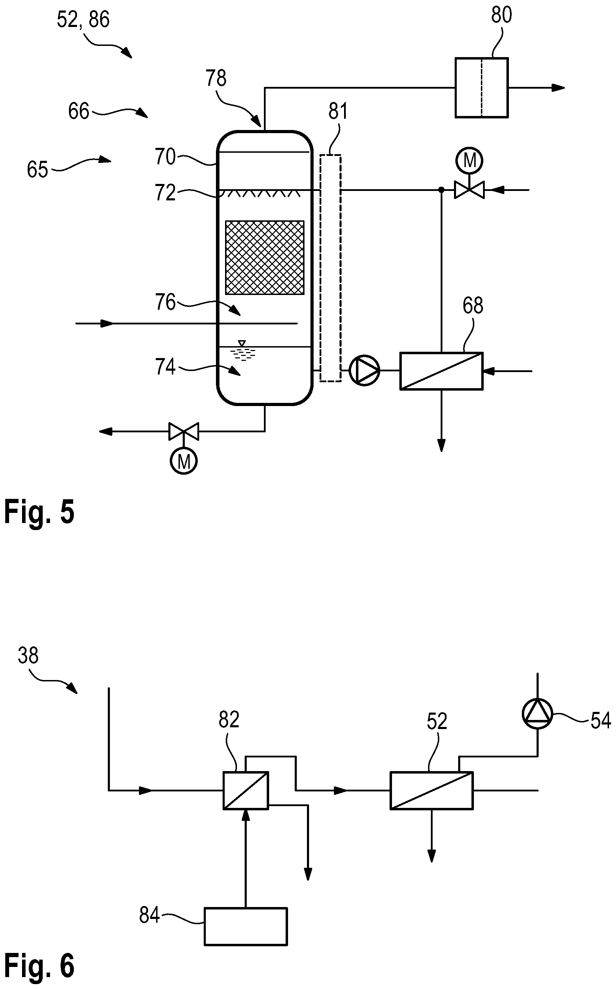

Figur 5 zeigt eine Ausführungsform des Wärmetauschers 52 des ersten Wärmeträgerkreislaufs 38. Diese Ausführungsform kann in jede der übrigen Ausführungsformen als der oder einer der Wärmetauscher des ersten Wärmeträgerkreislauf 38 verwendet werden.

Der Wärmetauscher 52 umfasst in dieser Ausführungsform einen Gaswäscher 66 sowie einen Flüssigkeitswärmetauscher 68. Der Gaswäscher 66 und ein optionaler Luftfilter 80 können Teil eines Abluftreinigungssystem 65 sein.

Der Gaswäscher 66 weist ein von der Abluft durchströmtes Strömungsgefäß 70 auf, in dem ein Flüssigkeitszerstäuber 72 sowie ein Flüssigkeitsreservoir 74 vorgesehen sind. Zudem hat das Strömungsgefäß 70 einem Ablufteinlass 76 sowie einen Abluftauslass 78.

Der Flüssigkeitszerstäuber 72 ist im Strömungsgefäß 70 zwischen dem Ablufteinlass 76 und dem Abluftauslass 78 angeordnet.

Das Flüssigkeitsreservoir 74 ist auf der Seite des Ablufteinlasses 76 angeordnet, die vom Flüssigkeitszerstäuber 72 abgewandt ist.

Dies ist gleichzeitig die Unterseite des Strömungsgefäßes 70.

Das Flüssigkeitsreservoir 74 ist mit dem Zulauf des Flüssigkeitswärmetauschers 68 verbunden und der Flüssigkeitszerstäuber 72 mit dem Ablauf des Flüssigkeitswärmetauschers 68.

Eine Pumpe ist zwischen dem Flüssigkeitsreservoir 74 und dem Flüssigkeitswärmetauscher 68 angeordnet.

Während des Betriebs strömt die Abluft der Quellenanlage 30 durch den Ablufteinlass 76 in das Strömungsgefäß 70 und am Abluftauslass 78 aus dem Strömungsgefäß 70 heraus.

Gleichzeitig wird Flüssigkeit am Flüssigkeitszerstäuber 72 zerstäubt in das Strömungsgefäß 70 eingebracht, sodass die Abluft der Quellenanlage 30 durch die zerstäubte Flüssigkeit strömt. Hierbei lösen sich in der Abluft befindliche Verunreinigungen, insbesondere Kohlenwasserstoffe, wodurch die Luft gereinigt wird. Gleichzeitig wird die Wärme der Abluft auf die Flüssigkeit übertragen.

Die Flüssigkeit im Flüssigkeitsreservoir 74 ist somit aufgewärmt und enthält einen Teil der Abwärme der Abluft der Quellenanlage 30.

Diese Flüssigkeit wird dann zum Flüssigkeitswärmetauscher 68 gepumpt, in dem die darin enthaltene Wärme in den ersten Wärmeträgerkreislauf 38 übertragen wird.

Zusätzlich kann der Gaswäscher 66 einen Luftfilter 80, wie einen Elektrofilter, aufweisen, der stromabwärts des Strömungsgefäßes 70 im Abluftstrom angeordnet ist.

In einer Abwandlung kann ein Flüssigkeitsspeicher 81 (auch "Skimtank" genannt; in Figur 5 gestrichelt dargestellt) vorhanden sein, der zwischen dem Strömungsgefäß 70 und dem Flüssigkeitswärmetauscher 68 angeordnet ist.

Das Flüssigkeitsreservoir 74 und der Flüssigkeitszerstäuber 72 sind mit dem Flüssigkeitsspeicher 81 verbunden, wodurch ein Kreislauf gebildet ist.

Gleichzeitig ist der Flüssigkeitsspeicher 81 mit dem Flüssigkeitswärmetauscher 68 verbunden.

Im Betrieb wird erwärmte Flüssigkeit vom Flüssigkeitsreservoir 74 in den Flüssigkeitsspeicher geleitet, sodass sich die Flüssigkeit im Flüssigkeitsspeicher 81 erwärmt.

Die erwärmte Flüssigkeit im Flüssigkeitsspeicher 81 wird dann dem Flüssigkeitswärmetauscher 68 zugeführt, der die Wärme der Flüssigkeit teilweise entnehmen kann. Abgekühlte Flüssigkeit wird dann wieder dem Flüssigkeitsspeicher 81 zugeführt.

Das Flüssigkeitsreservoir 74 kann in dieser Alternative auch entfallen. Stattdessen kann ein Flüssigkeitsauslass am Strömungsgefäß 70 vorgesehen sein.

In Figur 6 ist eine weitere Ausgestaltung dargestellt, die mit beliebigen anderen der Ausführungsform kombiniert werden kann.

In dieser Ausführungsform weist der erste Wärmeträgerkreislauf 38 einen zweiten Wärmetauscher 82 auf.

Der zweite Wärmetauscher 82 ist mit einer Nebenquellenanlage 84 in thermischem Kontakt, d. h. die Abwärme der Nebenquellenanlage 84 liegt direkt am zweiten Wärmetauscher 82 an, beispielsweise als Abluft oder als Kühlwasser. Der zweite Wärmetauscher 82 ist beispielsweise ein Luftwärmetauscher oder ein Flüssigkeitswärmetauscher.

Als Nebenquellenanlage 84 kommen die gleichen Anlagen in Betracht, die bereits für die Quellenanlage 30 aufgezählt wurden.

Beispielsweise ist der zweite Wärmetauscher 82 stromaufwärts des ersten Wärmetauschers 52 vorgesehen.

Auf diese Weise kann Abwärme von mehreren Anlagen 30, 74 von der Wärmepumpe 42 aufgenommen und somit als Prozesswärme der Senkenanlage 32 zur Verfügung gestellt werden.

Die Nebenquellenanlage 84 stellt insbesondere eine geringere Menge an Abwärme als die Quellenanlage 30 bereit, weswegen die Anordnung des zweiten Wärmetauschers 82 stromaufwärts des ersten Wärmetauschers 52 besonders effizient ist, da dann ein größerer Temperaturunterschied und somit ein höherer Grad der Wärmeübertragung vorhanden ist.

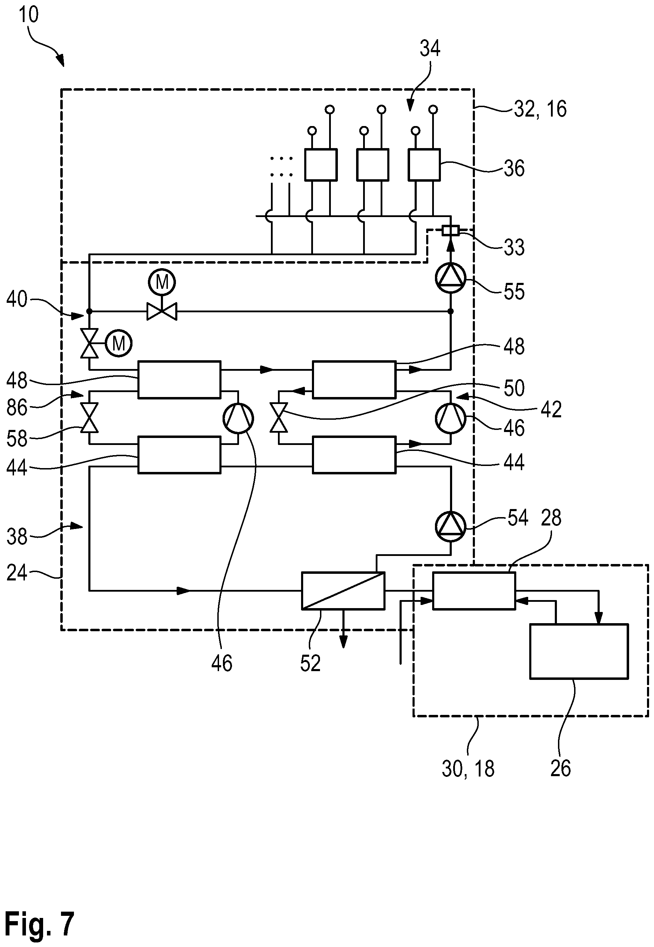

In Figur 7 ist eine vierte Ausführungsform des Teils des Systems 10 dargestellt, das ähnlich zu den Figuren 2 und 4 ist.

In dieser Ausführungsform weist die Wärmepumpenanlage 24 mehrere Wärmepumpen auf, im Beispiel eine erste Wärmepumpe 42 und eine zweite Wärmepumpe 86.

Die erste Wärmepumpe 42 ist wie die Wärmepumpe 42 der vorangegangenen Ausführungsformen ausgebildet und in der Wärmepumpenanlage 24 angeordnet.

Die zweite Wärmepumpe 86 ist in gleicher Weise wie die erste Wärmepumpe 42 ausgestaltet und parallel zur ersten Wärmepumpe 42 zwischen dem ersten Wärmeträgerkreislauf 38 und zweiten Wärmeträgerkreislauf 40 angeordnet.

Die Zufuhr der Wärmepumpe 42, auch hier der Verdampfer 44, ist im ersten Wärmeträgerkreislauf 38 und die Abfuhr der Wärmepumpe 42, hier also der Kondensator 48 ist im zweiten Wärmeträgerkreislauf 40 angeordnet.

Im gezeigten Ausführungsbeispiel ist die Zufuhr der zweiten Wärmepumpe 86 stromabwärts der Zufuhr der erste Wärmepumpe 42 im ersten Wärmeträgerkreislauf 38 angeordnet, wohingegen die Abfuhr der zweiten Wärmepumpe 86 stromaufwärts der Abfuhr der ersten Wärmepumpe 42 im zweiten Wärmeträgerkreislauf 40 angeordnet ist.

Insbesondere sind die Zufuhren der Wärmepumpen 42, 86 und auch die Abfuhren der Wärmepumpe 42, 86 in der Reihe angeordnet.

Die Anordnung der Abfuhren im zweiten Wärmeträgerkreislauf 40 ist somit bezüglich des Flusses des Wärmeträgers in umgekehrter Reihenfolge wie die Anordnung der Zufuhren im ersten Wärmeträgerkreislauf 38.

Beispielsweise hat der Wärmeträger des ersten Wärmeträgerkreislaufs 38 an der Zufuhr der ersten Wärmepumpe 42 eine Temperatur von 85°C und an der Zufuhr der zweiten Wärmepumpe 86 noch eine Resttemperatur von 55°C. Beide Wärmepumpen 42, 86 erzeugen eine Temperatur des Wärmeträger des zweiten Wärmeträgerkreislaufs 40 von 148°C.

Durch die Verwendung der zweiten Wärmepumpe 86 können, im Gegensatz zu einer einzelnen Wärmepumpe mit hoher Leistung, zwei Wärmepumpen mit geringerer Leistung aber einem höheren Wirkungsgrad verwendet werden. Der höhere Wirkungsgrad wird erreicht, da die Wärmepumpen 42 ,86 jeweils nur für einen kleineren Temperaturleistungsbereich ausgelegt sein müssen. Trotz höherer Investitionskosten können die Betriebskosten hierbei geringer ausfallen als beim Einsatz einer einzelnen Wärmepumpe.

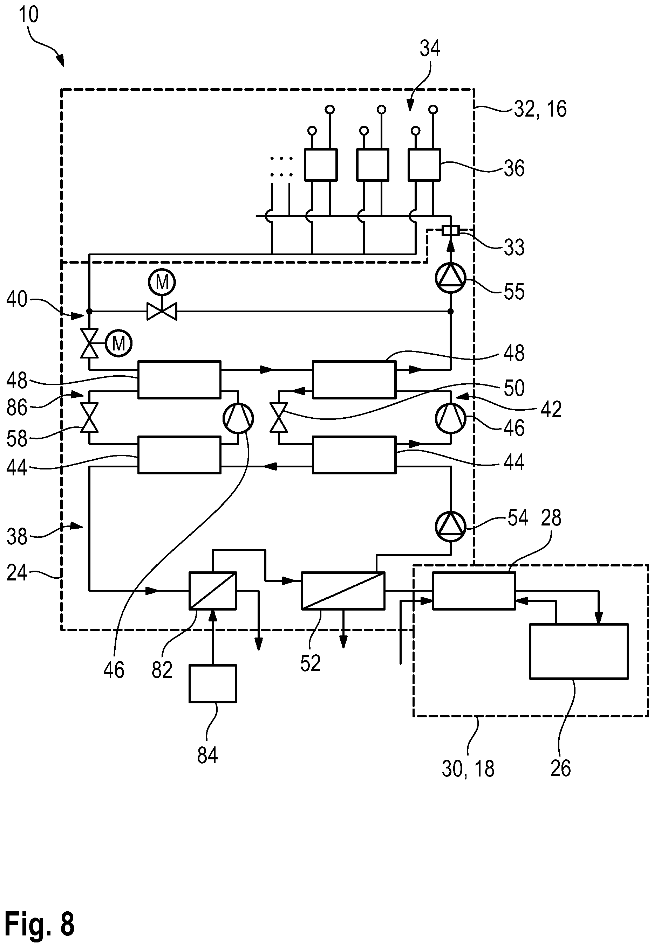

Die in Figur 8 gezeigte vierte Ausführungsform entspricht der in Figur 7 gezeigten dritten Ausführungsform, wobei die in Figur 6 gezeigte Ausgestaltung angewendet ist, bei der eine Nebenquellenanlage 84 über einen zweiten Wärmetauscher 82 zusätzliche Wärme in den ersten Wärmeträgerkreislauf 38 einbringt.

Auch in dieser Ausführungsform kann einer oder beide der Wärmetauscher 52, 82 wie der Wärmetauscher gemäß der Ausgestaltung der Figur 5 ausgebildet sein.

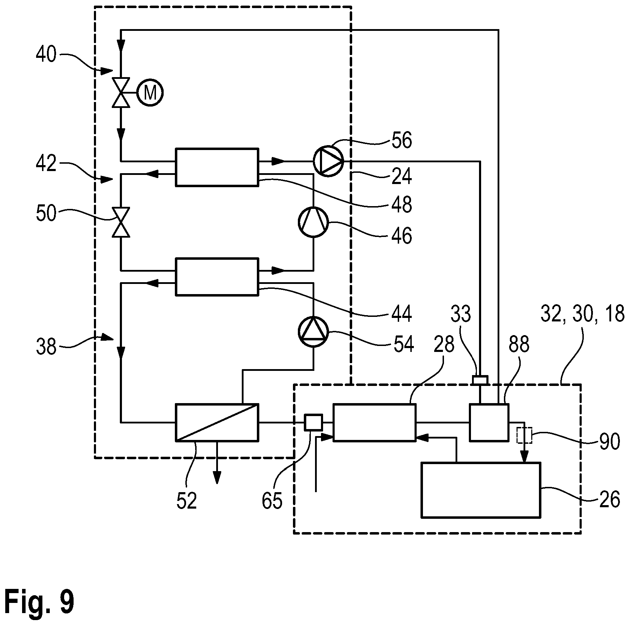

In Figur 9 ist eine fünfte Ausführungsform des Systems 10 gemäß Figur 1 äußerst schematisch dargestellt. Diese Ausführungsform basiert auf der ersten Ausführungsform, wobei auch die übrigen Ausführungsformen als Ausgangspunkt hätten dienen können.

Insbesondere hat das System 10 dieser fünften Ausführungsform ein Abluftreinigungssystem 65 wie zur Ausführungsform nach Figur 5 beschrieben bzw. einen Wärmetauscher 52 des ersten Wärmeträgerkreislaufs 38 mit einem Gaswäscher 66, wie zur Ausführungsform nach Figur 5 beschrieben.

In diesem Ausführungsbeispiel ist Senkenanlage 32 die Querreckanlage 18 des Systems 10. Die Querreckanlage 18 kann zudem die Quellenanlage 30 sein, sodass die Querreckanlage 18 und die Senkenanlage 32 die gleiche Anlage sind.

Entsprechend weist die Querreckanlage 18 den Eingang 33 auf und zudem einen Luftwärmetauscher 88.

Der Luftwärmetauscher 88 ist im zweiten Wärmeträgerkreislauf 40 angeordnet und erhält den von der Wärmepumpe 42 erwärmten Wärmeträger.

Der Luftwärmetauscher 88 ist stromabwärts der Vorrichtung 28 zur Wärmerückgewinnung der Querreckanlage 18 angeordnet, aber stromaufwärts des Ofens 26.

Der Luftwärmetauscher 88 erhält daher auch einen von der Vorrichtung 28 vorgewärmten Frischluftstrom für den Ofen 26, der durch den Luftwärmetauscher 88 weiter erwärmt wird.

Die auf diese Weise erwärmte Frischluft wird dann dem Ofen 26 zugeführt, beispielsweise der Vorheizzone.

Zur Redundanz bei Ausfällen der Wärmepumpe 42 oder zur Justierung des Temperaturniveaus kann zwischen der Vorrichtung 28 zur Wärmerückgewinnung und dem Ofen 26 im Strömungsweg der Frischluft ein Heizregister 90 angeordnet sein, insbesondere stromabwärts des Luftwärmetauschers 88.

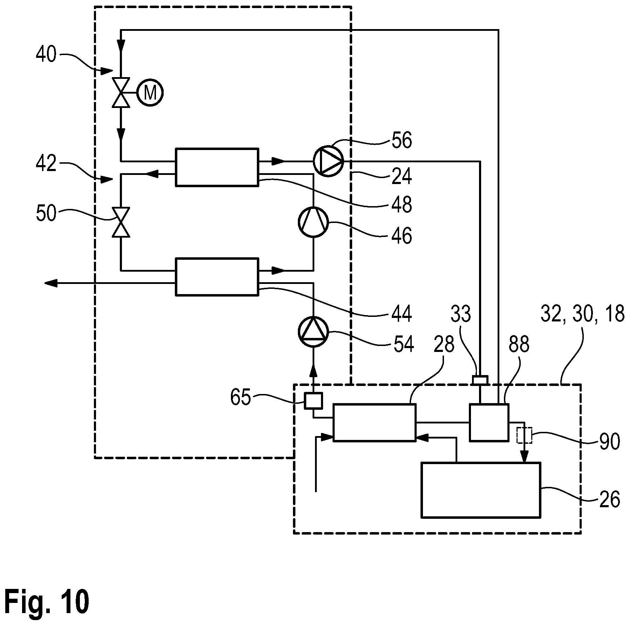

In Figur 10 ist eine sechste Ausführungsform dargestellt, die auf der fünften Ausführungsform basiert.

In dieser sechsten Ausführungsform ist kein erster Wärmeträgerkreislauf 38 vorgesehen, sondern die Abluft der Quellenanlage 30, insbesondere die Abluft der Vorrichtung 28 zur Wärmerückgewinnung, wird auf den Verdampfer 44 der Wärmepumpe 42 geleitet.

Hierzu ist dem Verdampfer 44 ein Abluftreinigungssystem 65 wie zur Figur 5 beschrieben vorgeschaltet. Die durch das Abluftreinigungssystem 65 gereinigte Abluft trifft, nachdem sie den Gaswäscher 66 und den optionalen Luftfilter 80 passiert hat, direkt auf den Verdampfer 44.

Hierdurch kann der erste Wärmeträgerkreislauf 38 eingespart werden.

Es ist denkbar, dass auch in den übrigen Ausführungsformen die Abluft bzw. die in Flüssigkeit vorhandene Abwärme der Quellenanlage 30 direkt dem Verdampfer 44 der Wärmepumpe 42 zugeleitet wird.

Der nach dem Verdampfer 44 der Wärmepumpe 42 oder dem Wärmetauscher 52 des ersten Wärmeträgerkreislaufs 38 abgekühlte Abluftstrom kann in jeder Ausführungsform zur Kühlung in der Kühlzone der Querreckanlage 18, als Niedertemperaturwärme in anderen Prozessen oder zur Heizung eines Gebäudes genutzt werden.

Unabhängig von der Ausführungsform kann am Verdampfer 44 oder am Wärmetauscher 52 des ersten Wärmeträgerkreislaufs 38 Kondenswasser anfallen, das durch die Abkühlung und/oder Entspannung der Abluft der Quellenanlage 30 entsteht. Dieses Wasser kann einem Gaswäscher, wie einem Gaswäscher 66 der Ausführungsform gemäß Figur 5, zugeführt werden, um so die notwendige Nachspeisemenge an aufbereitetem Frischwasser zu verringern.

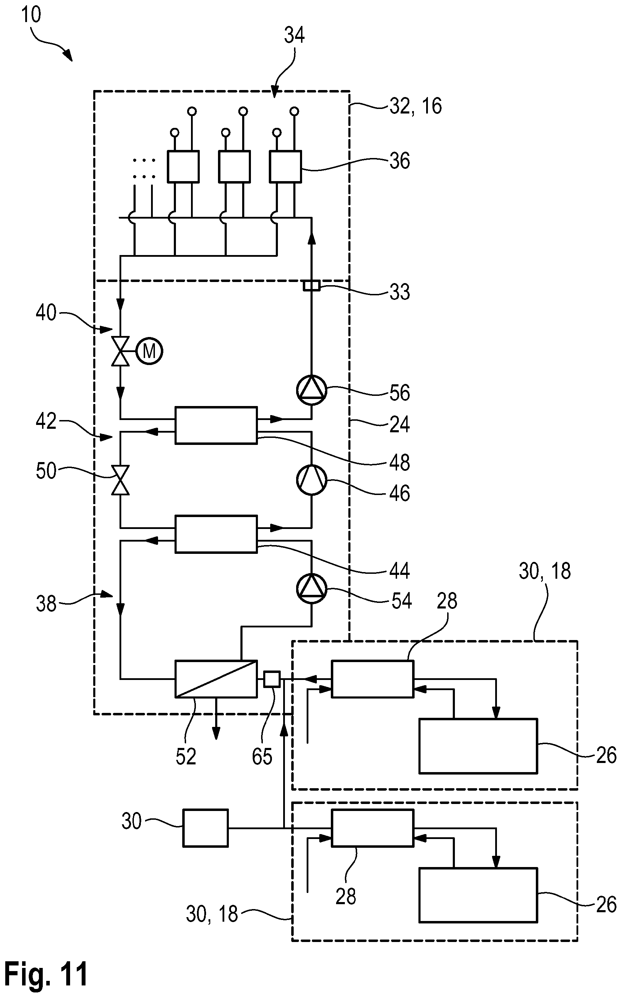

In Figur 11 ist ein System 10 gezeigt, das mehrere Quellenanlagen 30 aufweist, beispielsweise zwei Querreckanlagen 18 und eine weitere Anlage. Denkbar ist auch, dass das System 10 zwei oder mehr als drei Quellenanlagen 30 aufweist.

Die Abluftströme der Quellenanlagen 30 werden zusammengeführt und gemeinsam dem Verdampfer 44 der Wärmepumpe 42 oder dem Wärmetauscher 52 des ersten Wärmeträgerkreislaufs 38 zugeführt.

Auch hier können ein oder mehrere Abluftreinigungssysteme 65 wie zur Figur 5 beschrieben zum Einsatz kommen. Beispielsweise reinigt das Abluftreinigungssystem 65 die bereits zusammengeführten Abluftströme, sodass nur ein Abluftreinigungssystem 65 benötigt wird.

## Patentansprüche

1. System zur Herstellung von Kunststofffolie mit einer Quellenanlage (30), einer Senkenanlage (32) und einer Wärmepumpe (42),
wobei die Wärmepumpe (42) eine Zufuhr für Wärme und eine Abfuhr für Nutzwärme aufweist,
wobei die Quellenanlage (30) eine Abwärmeabfuhr aufweist, die mit der Zufuhr der Wärmepumpe (42) thermisch verbunden ist, und
wobei die Senkenanlage (32) eine Prozesswärmezufuhr aufweist, die mit der Abfuhr der Wärmepumpe (42) thermisch verbunden ist.

2. System nach Anspruch 1, **dadurch gekennzeichnet, dass** die Zufuhr der Wärmepumpe (42) ein Verdampfer (44) und/oder die Abfuhr der Wärmepumpe (42) ein Kondensator (48) ist.

3. System nach Anspruch 1 oder 2, **dadurch gekennzeichnet, dass** das System (10) einen ersten Wärmeträgerkreislauf (38) aufweist, der die Quellenanlage (30) mit der Wärmepumpe (42) thermisch verbindet.

4. System nach Anspruch 3, **dadurch gekennzeichnet, dass** der erste Wärmeträgerkreislauf (38) einen ersten Wärmetauscher (52), insbesondere einen LuftWärmetauscher oder Flüssigkeitswärmetauscher (68) aufweist, der mit der Abwärmeabfuhr der Quellenanlage (30) thermisch verbunden ist.

5. System nach Anspruch 4, **dadurch gekennzeichnet, dass** das System (10) eine Nebenquellenanlage (84) aufweist und der erste Wärmeträgerkreislauf (38) einen zweiten Wärmetauscher (82) aufweist, wobei eine Abwärmeabfuhr der Nebenquellenanlage (84) thermisch mit dem zweiten Wärmetauscher (82) verbunden ist, und/oder
dass die Abwärmeabfuhr der Quellenanlage (30) eine Abluftabfuhr ist, wobei der erste Wärmetauscher (52) einen Gaswäscher (66) und einen Flüssigkeitswärmetauscher (68) umfasst.

6. System nach einem der vorhergehenden Ansprüche, **dadurch gekennzeichnet, dass** das System (10) einen zweiten Wärmeträgerkreislauf (40) aufweist, der die Senkenanlage (32) mit der Wärmepumpe (42) thermisch verbindet.

7. System nach Anspruch 7, **dadurch gekennzeichnet, dass** das System (10) eine Zusatzheizung (58) aufweist, die im zweiten Wärmeträgerkreislauf (40) stromabwärts der Wärmepumpe (42) und stromaufwärts der Senkenanlage (32) angeordnet ist,
insbesondere wobei der zweite Wärmeträgerkreislauf (40) eine Bypass-Strecke (60) mit einem Bypass-Ventil (62) aufweist, wobei die Bypass-Strecke (60) stromabwärts der Wärmepumpe (42) und stromaufwärts der Zusatzheizung (58) mündet und/oder von einem Punkt stromaufwärts der Wärmepumpe (42) und stromabwärts der Senkenanlage (32) ausgeht.

8. System nach einem der vorhergehenden Ansprüche, **dadurch gekennzeichnet, dass** das System (10) zwei Wärmepumpen (42, 86) aufweist, die parallel zwischen der Quellenanlage (30) und der Senkenanlage (32) geschaltet sind, insbesondere wobei die Wärmepumpen (42, 86) verschiedene Temmperaturleistungsbereiche aufweisen.

9. System nach Anspruch 8, **dadurch gekennzeichnet, dass** die Zufuhren der Wärmepumpen (42, 86) im ersten Wärmeträgerkreislauf (38) in Reihe angeordnet sind und/oder wobei die Abfuhren der Wärmepumpen (42, 86) im zweiten Wärmeträgerkreislauf (40) in Reihe angeordnet sind.

10. System nach einem der vorhergehenden Ansprüche, **dadurch gekennzeichnet, dass** die Quellenanlage (30) und/oder die Nebenquellenanlage (84) eine Reckanlage, insbesondere eine Querreckanlage (18) oder eine Simultanreckanlage, eine Extrusionsanlage (12), eine Gießwalzenanlage (14) und/oder eine Zugrollenanlage (20) ist; und/oder dass die Senkenanlage (32) eine Reckanlage, insbesondere eine Querreckanlage (18) oder eine Längsreckanlage (16), ein Kristallisator, eine Rohstofftrocknungsanlage und/oder ein Wasserbad einer Simultanreckanlage ist.

11. System nach einem der vorhergehenden Ansprüche, **dadurch gekennzeichnet, dass** die Quellenanlage (30) eine Vorrichtung (28) zur Wärmerückgewinnung aufweist, wobei die Abwärmeabfuhr der Vorrichtung (28) zur Wärmerückgewinnung die Abwärmeabfuhr der Quellenanlage (30) ist.

12. Verfahren zum Betrieb eines Systems (10) zur Herstellung von Kunststofffolie mit einer Quellenanlage (30), einer Senkenanlage (32), und einer Wärmepumpe (42), wobei das Verfahren Folgendes umfasst:
- Zuführen von Abwärme der Quellenanlage (30) zur Wärmepumpe (42), und
- Zuführen von Nutzwärme von der Wärmepumpe (42) zur Senkenanlage (32) als Prozesswärme.

13. Verfahren nach Anspruch 12, **dadurch gekennzeichnet, dass** die Abwärme der Quellenanlage (30) die Abwärme einer Vorrichtung (28) zur Wärmerückgewinnung der Quellenanlage (30) ist.

14. Verfahren nach Anspruch 12 oder 13, **dadurch gekennzeichnet, dass** der Senkenanlage (32) zur Nutzwärme der Wärmepumpe andere Nutzwärme zugeführt wird, die eine Zusatzheizung (58) des Systems (10) erzeugt.

15. Verfahren nach Anspruch 14, **dadurch gekennzeichnet, dass** die andere Nutzwärme in einem zweiten Wärmeträgerkreislauf (40) des Systems (10) erzeugt wird, der die Nutzwärme der Wärmepumpe (42) zur Senkenanlage (32) führt, insbesondere wobei ein Bypass-Ventil (62) in einer Bypass-Strecke (60) des zweiten Wärmeträgerkreislaufs (40), die die Wärmepumpe (42) überbrückt, geöffnet und ein Sperrventil (64) stromaufwärts der Wärmepumpe (42) geschlossen wird, wenn die Rücklauftemperatur von der Senkenanlage (32) im zweiten Wärmeträgerkreislauf (40) über der Temperatur im zweiten Wärmeträgerkreislauf (40) unmittelbar stromabwärts der Wärmepumpe (42) liegt.
